(19) Europäisches Patentamt / European Patent Office / Office européen des brevets

(11) **EP 3 214 601 B1**

(12) **FASCICULE DE BREVET EUROPEEN**

(45) Date de publication et mention de la délivrance du brevet:
**07.10.2020 Bulletin 2020/41**

(51) Int Cl.:
*G06T 5/00* (2006.01)    *G06T 7/11* (2017.01)
*G06T 7/155* (2017.01)    *G06K 9/00* (2006.01)
*G06K 9/52* (2006.01)

(21) Numéro de dépôt: **17305233.3**

(22) Date de dépôt: **06.03.2017**

(54) **PROCÉDÉ D'AMÉLIORATION D'IMAGES APPLICABLE AUX IMAGES D'EMPREINTES DIGITALES**

VERFAHREN ZUR VERBESSERUNG VON BILDERN, DAS AUF BILDER VON FINGERABDRÜCKEN ANGEWANDT WERDEN KANN

IMAGE ENHANCEMENT METHOD APPLICABLE TO FINGERPRINT IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2016 FR 1651822**

(43) Date de publication de la demande:
**06.09.2017 Bulletin 2017/36**

(73) Titulaire: **Idemia Identity & Security France 92400 Courbevoie (FR)**

(72) Inventeurs:
• **KAZDAGHLI, Laurent**
  **92130 ISSY LES MOULINEAUX (FR)**
• **THUILLIER, Cédric**
  **92130 ISSY LES MOULINEAUX (FR)**
• **COUTURIER, Lauriane**
  **92130 ISSY LES MOULINEAUX (FR)**

(74) Mandataire: **Regimbeau 87 rue de Sèze 69477 Lyon Cedex 06 (FR)**

(56) Documents cités:
• REVATHY T ET AL: "Automatic Latent Fingerprint Segmentation based on Orientation and Frequency Features", 2014 INTERNATIONAL CONFERENCE ON COMMUNICATION AND SIGNAL PROCESSING, IEEE, 3 avril 2014 (2014-04-03), pages 1192-1196, XP032677809, DOI: 10.1109/ICCSP.2014.6950029 ISBN: 978-1-4799-3357-0 [extrait le 2014-11-07]
• VICTOR F. STRÎMBU ET AL: "A graph-based segmentation algorithm for tree crown extraction using airborne LiDAR data", ISPRS JOURNAL OF PHOTOGRAMMETRY AND REMOTE SENSING., vol. 104, 1 juin 2015 (2015-06-01), pages 30-43, XP055312815, AMSTERDAM, NL ISSN: 0924-2716, DOI: 10.1016/j.isprsjprs.2015.01.018
• SHAHRYAR KARIMI-ASHTIANI ET AL: "A robust technique for latent fingerprint image segmentation and enhancement", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE, PISCATAWAY, NJ, USA, 12 octobre 2008 (2008-10-12), pages 1492-1495, XP031374296, ISBN: 978-1-4244-1765-0

**Description**

DOMAINE DE L'INVENTION

L'invention concerne un procédé de traitement d'une image de doigt acquise par un capteur d'empreinte digitale de type en vue directe et comprenant au moins une empreinte digitale afin de mettre en oeuvre une authentification ou identification d'individu par comparaison d'empreintes digitales. L'invention s'applique en particulier au traitement d'images d'empreintes digitales acquises par des capteurs de type à transistor en couches minces.

ETAT DE LA TECHNIQUE

De nouveaux types de capteurs sont actuellement développés pour l'acquisition d'images d'empreintes digitales, reposant notamment sur la vue directe du doigt. C'est le cas par exemple des capteurs basés sur la technologie des transistors en couches minces ou TFT (acronyme anglais de Thin Film Transistor).

Ces capteurs peuvent être moins encombrants et d'utilisation plus rapide que des capteurs conventionnellement utilisés jusqu'à présent, qui sont des capteurs basés sur le principe de réflexion totale frustrée de la lumière sur une interface sur laquelle un utilisateur pose le doigt.

En effet, ces capteurs peuvent par exemple prendre une série d'images de la main d'un individu se rapprochant d'une surface de contact du capteur, et exploiter des images des doigts même en l'absence de contact avec la surface de contact, ou en l'absence de pression importante exercée par les doigts sur la surface de contact.

En revanche, les capteurs basés sur la vue directe produisent une image d'empreinte digitale dans laquelle le contraste est en général beaucoup plus faible que les images obtenues par les capteurs basés sur le principe de réflexion totale frustrée. De plus, des zones parasites peuvent exister sur les images, comme par exemple des ombres portées dans le cas où une image a été acquise en l'absence de contact des doigts sur la surface de contact du capteur.

De ce fait, les images d'empreintes digitales obtenues par des capteurs basés sur la vue directe ne sont à ce stade pas directement exploitables par les algorithmes mis en oeuvre dans des systèmes d'identification ou d'authentification automatique à partir des empreintes digitales.

Afin de rendre ces images compatibles, c'est-à-dire de faire en sorte qu'une empreinte digitale acquise avec un capteur à éclairage direct puisse être reconnue en utilisant les mêmes algorithmes que les empreintes acquises avec les technologies conventionnelles reposant sur la réflexion totale frustrée, il est nécessaire de proposer un traitement approprié.

Ce traitement doit tenir compte de la grande variabilité des images obtenues avec des capteurs basés sur la vue directe. Par exemple, des ombres portées sur les images peuvent avoir des tailles et des positions très variables selon le nombre et la position des sources lumineuses éclairant le doigt, et la position de la main lors de l'acquisition.

De plus, s'agissant d'un traitement permettant de mettre en œuvre une authentification ou identification d'individu par comparaison d'empreintes digitales sur une image de doigt acquise par un capteur d'empreinte digitale de type en vue directe, il est nécessaire que le procédé de traitement soit très rapide. En effet, un capteur d'empreinte digitale de type en vue directe acquiert généralement plus de 10 images par secondes, par exemple 15 ou 20 images par secondes, qui plus est de grande taille/résolution (par exemple 1600 x 1600 pixels) et le traitement de ces images doit être immédiat.

Certains procédés de traitement sont adaptés pour traiter des images d'empreintes digitales latentes, c'est-à-dire des images de la trace résiduelle résultant de l'apposition d'un doigt sur un support. Ce sont notamment ces empreintes digitales latentes qui sont relevées sur les lieux d'un crime et analysées par la police scientifique. Le traitement des empreintes digitales latentes n'a pas de contrainte de rapidité. Ainsi, le document "Automatic Latent Fingerprint Segmentation based on Orientation and Frequency Features", par Revathy et al., International Conférence on Communication and Signal Processing, 3-5 avril 2014, pages 1192-1196, décrit un procédé de traitement d'empreintes digitales latentes mettant en œuvre une segmentation automatique des images, basée sur les caractéristiques d'orientation et de fréquence, comprenant notamment la mise en œuvre d'une transformée de Fourier discrète. Le traitement proposé peut ne pas être adapté au traitement d'une image de doigt acquise par un capteur d'empreinte digitale de type en vue directe, qui prend plus de 10 images par seconde.

Le document "A robust technique for latent fingerprint image segmentation and enhancement", par Shahryar Karimi-Ashtiani et C.-C. Jay Kuo, 15th IEEE International Conférence on Image Processing, ICIP 2008, 12 octobre 2008, pages 1492-1495, XP031374296, ISBN 978-1-4244-1765-0, présente un procédé robuste pour segmenter et améliorer les images d'empreintes digitales latentes, utilisant une comparaison entre une fonction de distance et un seuil pour distinguer les empreintes digitales latentes par rapport au fond d'image.

De plus, les traitements proposés pour les empreintes digitales latentes visent à extraire toutes les informations de crêtes de l'image. Or, une image acquise par un capteur d'empreinte digitale de type en vue directe présente fréquemment à la surface du capteur des traces en dehors du doigt résultant d'apposition précédentes (qui sont donc des empreintes digitales latentes). Le traitement mis en œuvre doit pouvoir distinguer entre ces traces et les empreintes digitales du doigt présenté au capteur.

DESCRIPTION DE L'INVENTION

L'invention a pour objet de pallier le besoin identifié ci-avant, en proposant un procédé de traitement d'images qui permette d'adapter une image d'empreinte digitale acquise avec un capteur en vue directe, par exemple de type TFT, de sorte que l'image puisse être exploitée dans un système d'identification ou d'authentification automatique par empreintes digitales.

Un autre objet de l'invention est de proposer un traitement suffisamment rapide pour pouvoir être mis en œuvre en temps réel lors de l'acquisition des images par un capteur.

Un autre objet de l'invention est de proposer un traitement permettant de générer une image d'empreinte digitale exploitable par un système d'identification ou d'authentification qui soit générée à partir d'une seule image initiale, et pas synthétisée à partir de plusieurs prises, afin d'écarter des risques d'erreurs liées à un mouvement entre deux prises.

A cet égard, l'invention a pour objet un procédé de traitement d'une image de doigt acquise par un capteur d'empreinte digitale de type en vue directe et comprenant au moins une empreinte digitale afin de mettre en œuvre une authentification ou identification d'individu par comparaison d'empreintes digitales, ladite image comprenant un ensemble de pixels, chaque pixel étant associé à un niveau de gris, le procédé comprenant une étape de segmentation de l'image pour générer une image modifiée ne contenant que des régions de l'image présentant une alternance de zones claires et de zones sombres à une fréquence supérieure à une fréquence minimale, ladite étape de segmentation comprenant :

○ l'attribution, à chaque pixel de l'image, d'un niveau de réponse fréquentielle, correspondant à une fréquence d'alternances de zones claires et de zones sombres au voisinage du pixel, en évaluant les variabilités des niveaux de gris des pixels contenus dans une fenêtre de taille déterminée positionnée autour de chaque pixel, l'attribution à un pixel d'un niveau de réponse fréquentielle en évaluant les variabilités des niveaux de gris des pixels contenus dans une fenêtre de taille déterminée positionnée autour de chaque pixel comprenant la détermination d'un gradient de niveaux de gris correspondant à la différence entre le niveau de gris dudit pixel et le niveau de gris maximum parmi les niveaux de gris minimums des pixels contenus dans une fenêtre entourant chaque pixel de la fenêtre entourant ledit pixel, le niveau de réponse fréquentielle attribué audit pixel étant la valeur absolue dudit gradient de niveaux de gris,
○ la définition de régions de l'image par regroupement de pixels voisins de même niveau de réponse fréquentielle,
○ la détermination d'un niveau de réponse fréquentielle seuil,
○ sélection parmi les régions de l'image précédemment définies par regroupement de pixels voisins de même niveau de réponse fréquentielle des régions dont les pixels présentent un niveau de réponse fréquentielle supérieur ou égal au niveau de réponse fréquentielle seuil, et
○ la génération d'une image modifiée ne comprenant, parmi les régions de l'image précédemment définies par regroupement de pixels voisins de même niveau de réponse fréquentielle, que des régions dont les pixels présentent un niveau de réponse fréquentielle supérieur ou égal au niveau de réponse fréquentielle seuil,

le procédé comprenant ensuite une étape d'authentification ou identification d'individu par comparaison d'empreintes digitales sur la base de l'image modifiée.

Avantageusement, mais facultativement, le procédé selon l'invention peut en outre comprendre au moins l'une des caractéristiques suivantes :

- les régions de l'image définies par regroupement de pixels voisins de même niveau de réponse fréquentielle sont avantageusement structurées, pour déterminer le niveau de réponse fréquentielle seuil, en arbre topologique ou arbre de composante connexe, définissant une relation de parent-filles entre lesdites régions de l'image, déterminée en prenant en compte à la fois l'organisation spatiale des régions définies par regroupement de pixels voisins de même niveau de réponse fréquentielle et les niveaux de réponse fréquentielle de pixels contenus dans lesdites régions;
- les régions de l'image, définies lors de la définition de régions de l'image par regroupement de pixels voisins de même niveau de réponse fréquentielle précédemment attribué à chaque pixel, sont avantageusement structurées selon une relation parent-fille définie comme suit, pour chaque région i de l'image :

○ initialement toutes les régions voisines de la région i sur l'image sont considérées comme parents potentiels,
○ si le nombre de parents potentiels est égal à 1, le voisin j est assigné en tant que parent à la région i, et la région i est retirée de la liste de parents potentiels de la région j,
○ Sinon, chaque région parente de la région i est sélectionnée, parmi la liste des parents potentiels ayant un niveau de réponse fréquentielle plus bas que celui de la région i, comme celle ayant le niveau le plus proche de celui de la région i, et la région i est retirée de la liste des parents potentiels de sa région parente, et
◦ si tous les parents potentiels de la région i ont un niveau de réponse fréquentielle plus élevé que celui de la région i, chaque région parente de la région i est sélectionnée comme celle ayant le niveau de réponse fréquentielle le plus proche de celui de la région i, et la région i est retirée de la liste des parents potentiels de sa région parente;

- la détermination du niveau de réponse fréquentielle seuil peut comprendre la mise en œuvre des étapes suivantes, à partir des régions de l'image définies lors de la définition de régions de l'image par regroupement de pixels voisins de même niveau de réponse fréquentielle précédemment attribué à chaque pixel :

  ◦ pour un niveau N de réponse fréquentielle fixé, définition d'un ensemble de macro-régions dites de niveau N, telles que chaque macro-région de niveau N comprend une région parente de pixels de niveau de réponse fréquentielle inférieur ou égal à N et l'ensemble des régions filles de cette région, ,
  ◦ pour chaque valeur de niveau de réponse fréquentielle à partir d'une valeur initiale de niveau de réponse fréquentielle dans l'image, calcul de la variation relative de surface des macro-régions d'un niveau $N_n$ par rapport aux macro-régions du niveau précédent $N_{n-1}$, et
  ◦ le niveau de réponse fréquentielle minimale est déterminé comme le niveau $N_i$ pour lequel la variation relative de surface des macros-régions de niveau $N_i$ par rapport au niveau précédent $N_{i-1}$ est minimale;

- l'étape de segmentation comprend, avant la définition des régions de l'image par regroupement de pixels voisins de même niveau de réponse fréquentielle, la mise en œuvre des étapes de :

  ◦ érosion morphologique puis dilatation morphologique de l'image en fonction des valeurs de niveau de gris des pixels, l'érosion morphologique consistant à assigner à un pixel la valeur du niveau de réponse fréquentielle la plus basse d'une fenêtre de pixels l'englobant, la dilatation morphologique consistant à assigner à un pixel la valeur du niveau de réponse fréquentielle la plus haute d'une fenêtre de pixels l'englobant,
  ◦ génération d'une image différentielle par soustraction, à l'image initiale, de l'image ayant subi l'érosion et la dilatation morphologique,
  ◦ application à l'image différentielle d'un filtre médian sur la valeur du niveau de réponse fréquentielle,

  et dans lequel la définition des régions de l'image par regroupement de pixels voisins de même niveau de réponse fréquentielle est mise en œuvre sur l'image résultant de l'application du filtre médian sur l'image différentielle;
- le procédé peut en outre comprendre, après l'étape de segmentation, une étape de rehaussement des niveaux de gris associés aux pixels de l'image modifiée, le degré de rehaussement des pixels d'une région étant fonction du niveau de réponse fréquentielle des pixels de la région;
- avantageusement, plus le niveau de réponse fréquentielle des pixels d'une région de l'image modifiée est importante, et plus le degré de rehaussement des niveaux de gris associés aux pixels de la région est important.

L'invention a également pour objet un produit programme d'ordinateur, comprenant des instructions de code pour la mise en œuvre du procédé selon la description qui précède, lorsqu'il est exécuté par un processeur. De préférence, le produit programme d'ordinateur est un support lisible par ordinateur comprenant une mémoire stockant les instructions de code pour la mise en œuvre du procédé selon la description qui précède, lorsqu'il est exécuté par un ordinateur.

L'invention a également pour objet un système de traitement d'images, comprenant une unité de traitement comprenant des moyens de traitement configurés pour mettre en œuvre le procédé selon la description qui précède, lesdits moyens de traitement comprenant au moins un processeur et une mémoire.

Avantageusement, mais facultativement, le système de traitement d'images comprend en outre un moyen d'acquisition d'images, ledit moyen d'acquisition d'images étant un capteur d'empreintes digitales de type à transistor en couches minces.

Le procédé proposé comprend une étape de segmentation particulière qui permet de ne conserver de l'image initiale que les zones de l'image présentant une fréquence de variations entre des zones claires et des zones sombres importante, ce qui correspond, pour une image d'empreinte digitale, à la partie exploitable pour l'identification ou l'authentification correspondant aux crêtes et aux vallées de l'empreinte.

En particulier, les zones uniformément claires (zones de l'image où il n'y a pas de doigt) et les zones uniformément sombres (ombres portées) sont supprimées de l'image.

La formation des zones est réalisée par la mise en œuvre d'un algorithme de type « montée des eaux », ce qui permet de conserver des régions connexes des images et d'éviter la présence de trous dans les zones correspondant aux empreintes digitales.

Le procédé peut comporter un rehaussement des niveaux de gris des pixels en fonction de la fréquence de variations entre zones claires et zones sombres : en d'autres termes, plus la zone de l'image correspond à une zone exploitable de crêtes et de vallées, et plus le contraste de cette zone est augmenté.

En outre le procédé proposé peut être mis en œuvre en temps réel lors de l'acquisition de l'image car le processus de segmentation ne nécessite que de parcourir l'image une seule fois pour définir un ensemble de régions, puis de traiter des régions par blocs, cette étape nécessitant de ne traiter qu'un nombre de régions bien inférieur au nombre de pixels de l'image.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente les principales étapes d'un procédé de traitement d'image,
- La figure 2 représente schématiquement un système de traitement d'image.
- Les figures 3a à 3c représentent schématiquement l'implémentation des différentes étapes du procédé sur un exemple d'image.

DESCRIPTION DETAILLEE D'AU MOINS UN MODE DE REALISATION DE L'INVENTION

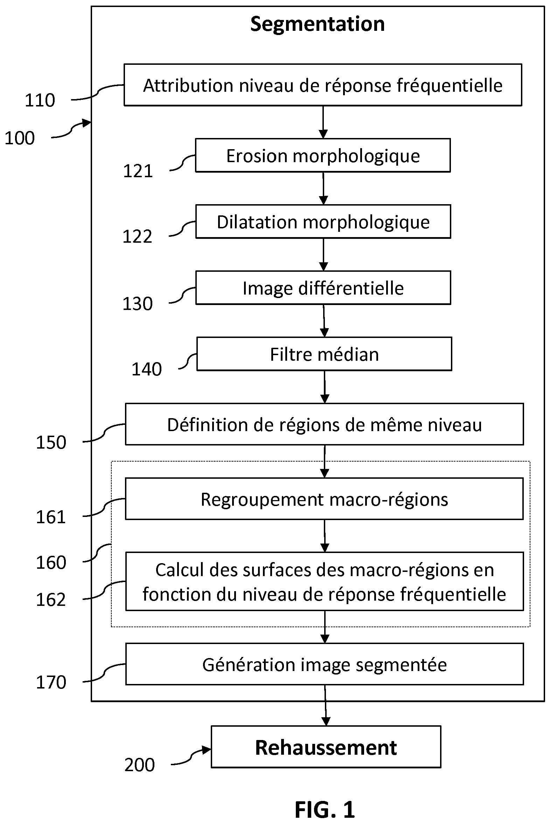

En référence à la figure 1, les principales étapes d'un procédé de traitement d'image sont représentées. L'image traitée comprend un ensemble de pixels, chaque pixel étant associé à un niveau de gris, classiquement compris entre 0 et 255.

L'image traitée est avantageusement une image d'un ou plusieurs doigts, du côté de la paume de la main, et figurant l'extrémité du ou des doigts sur lesquelles se trouvent les empreintes digitales, ou la paume même de la main. Plus avantageusement, l'image traitée est une image acquise à partir d'un capteur d'empreinte digitale de type en vue directe, comme un capteur basé sur la technologie des transistors en couche mince (TFT). On pourra se référer par exemple aux documents US 20020054394 ou US 20020000915. Une telle image se présente donc généralement avec des pixels majoritairement blancs, c'est-à-dire avec un niveau de gris à 255, et avec des zones sombres correspondant aux ombres et aux empreintes présentant des pixels avec des niveaux de gris proches de 0.

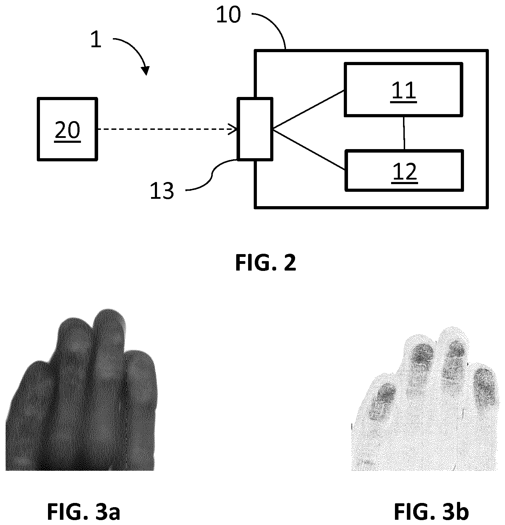

Comme représenté schématiquement sur la figure 2, le procédé de traitement d'image est mis en œuvre par un système de traitement d'images 1 comportant une unité de traitement 10 comme par exemple un ordinateur. L'unité de traitement 10 comprend des moyens de traitement 11 comme par exemple un processeur. Le traitement d'image peut être implémenté par un algorithme informatique approprié. Les moyens de traitement 11 sont alors adaptés pour exécuter des instructions de code permettant de mettre en œuvre l'algorithme de traitement d'images.

Le système de traitement d'images 1 comprend également avantageusement un capteur d'image 20, adapté pour communiquer avec l'unité de traitement 10 pour lui transmettre les images acquises. Avantageusement, le capteur d'image est un capteur d'empreintes digitales en vue directe, par exemple du type à transistor en couche mince.

Le capteur d'image 20 peut être distant de l'unité de traitement, et connecté à celle-ci par une connexion sans fil, par exemple de type wifi etc.

L'unité de traitement 10 comporte une mémoire 12 et une interface de communication 13 avec le capteur d'image 20. En variante, le système de traitement d'images peut aussi comprendre une base de données (non représentée) d'images, à partir de laquelle l'unité de traitement peut récupérer des images à traiter, ces images ayant été obtenues par un capteur d'images.

On a représenté sur la figure 3a un exemple d'image acquise à partir d'un capteur d'empreintes digitales en vue directe. Comme on peut le constater, cette image n'est pas exploitable en l'état pour réaliser un traitement d'identification ou d'authentification sur les empreintes digitales, par exemple par extraction et comparaison des minuties. Elle comporte en effet des ombres (autour des doigts), et des zones des doigts s'étendant au-delà des empreintes digitales et dépourvues d'intérêt pour un traitement d'identification ou d'authentification.

De retour à la figure 1, le procédé de traitement d'image comprend une première étape 100 de segmentation de l'image. Cette étape de segmentation est conçue de sorte à ne conserver de l'image initiale que les zones présentant une fréquence importante d'alternance entre des zones claires et des zones sombres. Ceci permet, dans le cas où l'image traitée est une image du bout des doigts portant les empreintes digitales, de ne conserver que la zone utile des empreintes digitales elles-mêmes.

Pour ce faire, l'étape 100 de segmentation comprend une première étape 110 d'attribution, à chaque pixel, d'un niveau de réponse fréquentielle, qui correspond à une fréquence d'alternances entre des zones claires et des zones foncées dans le voisinage du pixel.

Le niveau peut être déterminé en positionnant autour de chaque pixel une fenêtre de taille déterminée, et en évaluant les variabilités des niveaux de gris des pixels contenus dans la fenêtre. La fenêtre peut par exemple être un carré de l'ordre de 10 à 20 pixels de côté. L'évaluation des variabilités des niveaux de gris des pixels contenus dans la fenêtre peut comprendre, pour attribuer un niveau de réponse fréquentielle à un pixel, la détermination d'un gradient de niveaux de gris, le niveau de réponse fréquentielle attribué audit pixel étant basé sur ledit gradient de niveaux de gris.

Le gradient de niveaux de gris correspond à la différence entre le niveau de gris du pixel et les niveaux de gris des pixels dans la fenêtre. Plus précisément, en notant (z) les pixels contenus dans la fenêtre entourant le pixel (i), le gradient de niveaux de gris du pixel (i) est calculé par la différence entre le niveau de gris du pixel (i) et le niveau de gris maximum parmi les niveaux de gris minimums des pixels (y) contenus dans une fenêtre entourant chaque pixel (z) de la fenêtre entourant le pixel (i). De préférence, le gradient est calculé en valeur absolue.

En d'autres termes, en désignant par Y(i) l'ensemble des pixels (z) contenus dans la fenêtre entourant le pixel (i), Y(z) l'ensemble des pixels (y) contenus dans la fenêtre entourant chaque pixel (z), et niveau pixel le niveau de gris d'un pixel, le niveau de réponse fréquentielle "réponse (i)" du pixel (i) peut être calculé comme suit :

$$réponse(i) = abs\left[niveau\ pixel(i)\ -\ \max_{z \in Y(i)}\left(\min_{y \in Y(z)} niveau\ pixel(y)\right)\right]$$

Où "abs" désigne la fonction valeur absolue. Il est à noter que les fenêtres sont ici prises de même dimension dans la fonction maximum et minimum, mais qu'elles pourraient être de dimensions différentes.

A partir de cette étape, les valeurs traitées en chaque pixel ne sont donc plus des niveaux de gris mais des niveaux de réponse fréquentielle. La terminologie « pixel » est conservée.

Puis l'étape 100 de segmentation comprend avantageusement une étape d'ouverture morphologique de l'image, qui comprend une étape 121 d'érosion morphologique suivie d'une étape 122 de dilatation morphologique de l'image.

L'érosion morphologique est un traitement qui consiste à assigner à un pixel la valeur du niveau de réponse fréquentielle la plus basse d'une fenêtre de pixels l'englobant. Par exemple la fenêtre de pixels peut être une fenêtre carrée, par exemple de l'ordre de 10 pixels de côté, ou moins, comme 3 pixels de côté.

La dilatation morphologique est un traitement qui consiste à assigner à un pixel la valeur du niveau de réponse fréquentielle la plus haute d'une fenêtre de pixels l'englobant. Là encore la fenêtre de pixels peut par exemple être une fenêtre carrée, par exemple de l'ordre de 10 pixels de côté, ou moins, comme 3 pixels de côté.

Ces deux étapes permettent de moyenner l'image de laquelle les hautes fréquences d'alternances entre des zones claires et des zones sombres sont supprimées.

L'étape de fermeture morphologique est suivie d'une étape 130 de génération d'une image différentielle, qui est obtenue en soustrayant à l'image initiale l'image moyennée résultant du traitement des étapes 121 et 122. Ainsi l'image différentielle ne comporte plus que les zones d'intérêt dans l'image, c'est-à-dire les zones présentant une fréquence importante d'alternance entre des zones claires et des zones sombres, comme visible sur la figure 3b.

Puis l'étape de segmentation 100 comprend une étape 140 d'application d'un filtre médian à l'image différentielle obtenue à l'issue de l'étape 130, le filtre médian étant mis en œuvre en fonction des valeurs de niveau de réponse fréquentielle des pixels.

La segmentation 100 comprend ensuite une étape 150 de définition, dans l'image, de régions regroupant des pixels voisins de même niveau de réponse fréquentielle. Ces régions sont avantageusement structurées en arbre topologique, ou arbre de composantes connexes. L'arbre définit une relation de parent-filles entre les régions de l'image déterminées en prenant en compte à la fois l'organisation spatiale des régions définies par regroupement de pixels voisins de même niveau de réponse fréquentielle et les niveaux de réponse fréquentielle de pixels contenus dans ces régions. Il s'agit donc plus précisément d'un arbre morphologique de forme.

Pour ce faire les régions sont définies et structurées comme suit.

Une région est d'abord définie par l'ensemble des pixels voisins de même niveau de réponse fréquentielle. Pour chaque région, une liste de régions voisines est définie, c'est-à-dire des régions présentant des pixels en contact avec des pixels de la région considérée.

Puis une relation de parent entre régions, ou autrement dit une relation région fille - région parente, est définie comme suit :

- Pour une région i dite région fille, initialement toutes les régions voisines de la région i sont considérées comme parents potentiels.
- Si le nombre de parents potentiels est égal à 1, c'est-à-dire que la région i n'a qu'un seul voisin j, le voisin j est assigné en tant que parent à la région i, et la région i est retirée de la liste de parents potentiels de la région j.
- Sinon, on sélectionne parmi la liste des parents potentiels ayant un niveau de réponse fréquentielle plus bas que celui de la région i celui ou ceux ayant le niveau le plus proche de celui de la région i. Il peut donc y avoir plusieurs parents pour une même région i, qui ne sont alors pas voisins. Lorsque la région j est assignée en tant que parente à la région i, la région i est retirée de la liste des parents potentiels de la région j.

- Si tous les parents potentiels ont un niveau de réponse fréquentielle plus élevé que celui de la région i, on détermine comme parent pour la région i le ou les régions ayant le niveau de réponse fréquentielle le plus proche de celui de la région i (le niveau étant alors supérieur à celui de la région i). Lorsque la région j est assignée en tant que parente à la région i, la région i est retirée de la liste des parents potentiels de la région j.

La segmentation va ensuite comprendre une sélection des régions définies ci-avant, qui présentent un niveau de réponse fréquentielle supérieur à un niveau seuil déterminé.

Cependant, si en cherchant à ne conserver que les zones d'intérêt correspondant aux empreintes digitales, le seuil est fixé à une valeur trop importante, il existe un risque de ne récupérer de l'image initiale que des régions morcelées, comportant éventuellement des trous qui, bien que correspondant à des zones de plus basse réponse fréquentielles, peuvent être pertinents pour l'exploitation des empreintes.

Pour éviter ce phénomène, l'étape de segmentation 100 comprend une étape 160 de détermination du seuil de niveau de réponse fréquentielle comprenant une première sous-étape 161 de définition de macro-régions à partir des régions et des relations parent-fille définies ci-avant entre les régions.

Des macro-régions sont définies pour une valeur de niveau de réponse N fixée. Pour cette valeur N fixée, une macro-région comporte une région de niveau de réponse fréquentielle inférieure ou égale à N et toutes les régions filles de cette région.

La définition d'une telle macro-région est réalisée en déterminant, pour chaque région de l'image, la région parente présentant le plus haut niveau de réponse fréquentielle qui soit inférieur au niveau N. Puis à partir de ce parent, on définit la macro-région comme regroupant toutes les régions filles de ce parent.

Etant donnée la construction de la relation parent-fille définie ci-avant, les régions filles n'ont pas nécessairement un niveau de réponse fréquentielle plus élevé que la région parente. Dans certains cas, il existe pour une région parente des régions filles isolées mais présentant un niveau moindre (par exemple cas dans lequel la région fille n'a qu'un parent potentiel). Du fait de cette construction, le fait d'intégrer toutes les régions filles dans la macro-région permet d'éviter l'apparition, dans les macro-régions, de zones vides correspondant à des zones de l'image globalement plus sombres ou plus claires et dépourvues d'alternances de zones claires et sombres.

Chaque macro-région comprend donc une région de pixels de niveau de réponse fréquentielle inférieure ou égale à N, et un ensemble de régions voisines définies comme des régions filles par la définition donnée ci-avant.

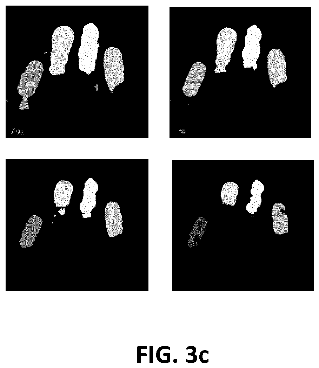

La définition d'une macro-région varie donc en fonction du niveau de réponse fréquentielle N. Par conséquent, la surface de l'image occupée par la macro-région varie également. Ceci apparaît sur la figure 3c, qui représente des macro-régions définies pour plusieurs niveaux de réponse fréquentielle.

En particulier, plus le niveau N augmente, et plus le nombre de régions filles dans une macro-région augmente, et donc plus la surface de la macro-région augment.

L'image segmentée à l'issue de l'étape 100 comporte les macro-régions ainsi définies, pour une valeur particulière de niveau de réponse fréquentielle N. Pour déterminer cette valeur, l'étape 160 comprend un processus incrémental 162 comprenant l'incrémentation de la valeur du niveau de réponse fréquentielle à partir d'un niveau initial, et avantageusement jusqu'à la plus haute valeur de niveau dans l'image. Pour chaque incrémentation de la valeur du niveau de réponse fréquentielle, la surface de l'image couverte par l'ensemble des macros-régions du niveau correspondant est mesurée, et la variation relative de la surface occupée par lesdites macro-régions par rapport au niveau précédent est calculée.

En notant $Surf(N_n)$ la surface occupées par les macro-régions de niveau de réponse fréquentielle $N_n$, on calcule : $R=(Surf(N_n)-Surf(N_{n-1}))/Surf(N_{n-1})$.

Le niveau de réponse fréquentielle seuil Ns déterminé pour la segmentation de l'image comme étant le niveau pour lequel la variation relative de la surface occupée par les macro-régions entre un niveau et le niveau précédent est minimale, c'est-à-dire lorsque R est le plus faible, ce qui correspond au niveau pour lequel la surface des macro-régions est la plus stable.

Une fois le niveau seuil déterminé, l'étape de segmentation 100 comprend une étape de génération 170 de l'image segmentée, dans laquelle ne sont conservées de l'image résultant de l'étape 140 que les macros-région de niveau Ns. De plus, les zones de recouvrement des macro-régions sont supprimées : lorsque deux macro-régions présentent des pixels en commun, la définition de la relation parent-fille implique qu'une macro-région est nécessairement englobée dans l'autre. Alors les zones de recouvrement de macro-régions sont supprimées en supprimant les macro-régions englobées dans des macro-régions plus grande.

Puis le procédé de traitement d'images comprend une deuxième étape 200 de rehaussement de l'image obtenue à l'issue de l'étape 100. Le rehaussement est une opération consistant à modifier les valeurs de niveaux de gris des pixels de l'image pour améliorer le contraste. Par exemple, si dans une image les pixels présentent des niveaux de gris compris entre 100 et 200, le rehaussement consiste à attribuer aux pixels présentant un niveau de gris à 200 un nouveau niveau à 255, à ceux présentant un niveau de gris à 100 un nouveau niveau à 0, et à distribuer les valeurs des autres pixels entre 0 et 255 selon une loi particulière.

En l'occurrence, dans l'étape 200, la loi de réassignation de la valeur du niveau de gris d'un pixel est choisie de sorte à être fonction de la valeur du niveau de réponse fréquentielle de ce pixel. En d'autres termes, plus le niveau de réponse fréquentielle d'un pixel est important, et plus le rehaussement est important, c'est-à-dire plus le contraste est important pour les pixels considérés.

Un exemple de loi de réassignation de la valeur du niveau de gris du pixel est la loi suivante :

$$g(x) = (1 - a) * min + (x - min) * \frac{(Gmax - Gmin)}{(max - min)}$$

Avec:

$$(Gmax - Gmin) = (1 - a) * (max - min) + a * 255$$

Où a est le niveau de réponse fréquentielle du pixel x, normalisé pour être ramené entre 0 et 1. Avec une valeur de a faible, correspondant à un faible niveau de réponse fréquentielle, la valeur du niveau de gris du pixel ne sera presque pas modifiée, et avec une valeur élevée, la valeur du niveau de gris du pixel sera plus modifiée.

Ceci permet d'améliorer le contraste dans les zones de l'image correspondant aux empreintes digitales, et qui sont donc les plus riches en information pour une exploitation future par un système d'identification ou d'authentification.

L'image obtenue à l'issue du procédé de traitement est donc exploitable pour mettre en œuvre une authentification ou identification d'individu par comparaison d'empreintes digitales. De préférence, le procédé est un procédé biométrique comprenant une étape d'authentification ou identification d'individu par comparaison d'empreintes digitales sur la base de l'image modifiée.

## Revendications

1. Procédé de traitement d'une image de doigt acquise par un capteur d'empreinte digitale de type en vue directe et comprenant au moins une empreinte digitale afin de mettre en œuvre une authentification ou identification d'individu par comparaison d'empreintes digitales, ladite image comprenant un ensemble de pixels, chaque pixel étant associé à un niveau de gris, le procédé comprenant une étape (100) de segmentation de l'image pour générer une image modifiée ne contenant que des régions de l'image présentant une alternance de zones claires et de zones sombres à une fréquence supérieure à une fréquence minimale, **caractérisé en ce que** ladite étape de segmentation (100) comprend :

   ◦ l'attribution (110), à chaque pixel de l'image, d'un niveau de réponse fréquentielle, correspondant à une fréquence d'alternances de zones claires et de zones sombres au voisinage du pixel, en évaluant les variabilités des niveaux de gris des pixels contenus dans une fenêtre de taille déterminée positionnée autour de chaque pixel, l'attribution à un pixel d'un niveau de réponse fréquentielle en évaluant les variabilités des niveaux de gris des pixels contenus dans une fenêtre de taille déterminée positionnée autour de chaque pixel comprenant la détermination d'un gradient de niveaux de gris correspondant à la différence entre le niveau de gris dudit pixel et le niveau de gris maximum parmi les niveaux de gris minimums des pixels contenus dans une fenêtre entourant chaque pixel de la fenêtre entourant ledit pixel, le niveau de réponse fréquentielle attribué audit pixel étant la valeur absolue dudit gradient de niveaux de gris,
   ◦ la définition de régions (150) de l'image par regroupement de pixels voisins de même niveau de réponse fréquentielle précédemment attribué à chaque pixel,
   ◦ la détermination d'un niveau de réponse fréquentielle seuil (160),
   ◦ sélection parmi les régions de l'image précédemment définies par regroupement de pixels voisins de même niveau de réponse fréquentielle des régions dont les pixels présentent un niveau de réponse fréquentielle supérieur ou égal au niveau de réponse fréquentielle seuil, et
   ◦ la génération d'une image modifiée (170) ne comprenant, parmi les régions de l'image précédemment définies par regroupement de pixels voisins de même niveau de réponse fréquentielle, que des régions dont les pixels présentent un niveau de réponse fréquentielle supérieur ou égal au niveau de réponse fréquentielle seuil,

   le procédé comprenant ensuite une étape d'authentification ou identification d'individu par comparaison d'empreintes digitales sur la base de l'image modifiée.

2. Procédé de traitement selon la revendication 1, dans lequel les régions de l'image définies par regroupement de pixels voisins de même niveau de réponse fréquentielle sont structurées, pour déterminer le niveau de réponse fréquentielle seuil (160), en arbre topologique ou arbre de composante connexe, définissant une relation de parent-filles entre lesdites régions de l'image, déterminée en prenant en compte à la fois l'organisation spatiale des régions définies par regroupement de pixels voisins de même niveau de réponse fréquentielle et les niveaux de réponse fréquentielle de pixels contenus dans lesdites régions.

3. Procédé de traitement selon la revendication 2, dans lequel les régions de l'image, définies lors de la définition de régions (150) de l'image par regroupement de pixels voisins de même niveau de réponse fréquentielle précédemment attribué à chaque pixel, sont structurées selon une relation parent-fille définie comme suit, pour chaque région i de l'image :

   - initialement toutes les régions voisines de la région i sur l'image sont considérées comme parents potentiels,
   - si le nombre de parents potentiels est égal à 1, le voisin j est assigné en tant que parent à la région i, et la région i est retirée de la liste de parents potentiels de la région j,
   - sinon, chaque région parente de la région i est sélectionnée parmi la liste des parents potentiels ayant un niveau de réponse fréquentielle plus bas que celui de la région i, comme celle ayant le niveau le plus proche de celui de la région i, et la région i est retirée de la liste des parents potentiels de sa région parente, et
   - si tous les parents potentiels de la région i ont un niveau de réponse fréquentielle plus élevé que celui de la région i, chaque région parente de la région i est déterminée comme celle ayant le niveau de réponse fréquentielle le plus proche de celui de la région i et la région i est retirée de la liste des parents potentiels de sa région parente.

4. Procédé de traitement selon l'une des revendications 2 ou 3, dans lequel la détermination du niveau (160) de réponse fréquentielle seuil comprend la mise en œuvre des étapes suivantes, à partir des régions de l'image définies lors de la définition de régions (150) de l'image par regroupement de pixels voisins de même niveau de réponse fréquentielle précédemment attribué à chaque pixel :

   - pour un niveau N de réponse fréquentielle fixé, définition (161) d'un ensemble de macro-régions dites de niveau N, telles que chaque macro-région de niveau N comprend une région parente de pixels de niveau de réponse fréquentielle inférieur ou égal à N et l'ensemble des régions filles de cette région,
   - pour chaque valeur de niveau de réponse fréquentielle à partir d'une valeur initiale de niveau de réponse fréquentielle dans l'image, calcul (162) de la variation relative de surface des macro-régions d'un niveau $N_n$ par rapport aux macro-régions du niveau précédent $N_{n-1}$, et
   - le niveau de réponse fréquentielle minimale est déterminé comme le niveau $N_i$ pour lequel la variation relative de surface des macros-régions de niveau $N_i$ par rapport au niveau précédent $N_{i-1}$ est minimale.

5. Procédé de traitement selon l'une quelconque des revendications précédentes, dans lequel l'étape de segmentation (100) comprend, avant la définition des régions (150) de l'image par regroupement de pixels voisins de même niveau de réponse fréquentielle, la mise en œuvre des étapes de :

   - érosion (121) morphologique puis dilatation (122) morphologique de l'image en fonction des valeurs de niveau de gris des pixels, l'érosion morphologique consistant à assigner à un pixel la valeur du niveau de réponse fréquentielle la plus basse d'une fenêtre de pixels l'englobant, la dilatation morphologique consistant à assigner à un pixel la valeur du niveau de réponse fréquentielle la plus haute d'une fenêtre de pixels l'englobant,
   - génération (130) d'une image différentielle par soustraction, à l'image initiale, de l'image ayant subi l'érosion et la dilatation morphologique,
   - application à l'image différentielle d'un filtre médian (140) sur la valeur du niveau de réponse fréquentielle,

   et dans lequel la définition des régions (150) de l'image par regroupement de pixels voisins de même niveau de réponse fréquentielle est mise en œuvre sur l'image résultant de l'application du filtre médian sur l'image différentielle.

6. Procédé de traitement selon l'une quelconque des revendications précédentes, comprenant en outre, après l'étape de segmentation (100), une étape de rehaussement (200) des niveaux de gris associés aux pixels de l'image modifiée, le degré de rehaussement des pixels d'une région étant fonction du niveau de réponse fréquentielle des pixels de la région.

7. Procédé de traitement selon la revendication 6, dans lequel plus le niveau de réponse fréquentielle des pixels d'une région de l'image modifiée est important, et plus le degré de rehaussement des niveaux de gris associés aux pixels de la région est important.

8. Produit programme d'ordinateur, comprenant un support lisible par ordinateur avec une mémoire stockant des instructions de code pour la mise en œuvre du procédé selon l'une des revendications précédentes, lorsqu'il est exécuté par un ordinateur (11).

9. Système (1) de traitement d'images, comprenant une unité de traitement (10) des moyens de traitement (11) configurés pour mettre en œuvre le procédé selon l'une des revendications 1 à 7.

10. Système (1) de traitement d'images selon la revendication 9, comprenant en outre un moyen d'acquisition d'images (20), ledit moyen d'acquisition d'images (20) étant un capteur d'empreintes digitales de type à transistor en couches minces.

**Patentansprüche**

1. Verfahren zur Verarbeitung eines Bildes eines Fingers, das von einem Fingerabdruck sensor vom Typ Direktsicht erfasst wurde und mindestens einen Fingerabdruck umfasst, um eine Authentifizierung oder Identifizierung eines Individuum durch Vergleich von Fingerabdrücken durchzuführen, wobei das Bild eine Gesamtheit von Pixeln umfasst, wobei jedes Pixel einer Graustufe zugeordnet ist, wobei das Verfahren einen Segmentierungsschritt (100) des Bildes umfasst, um ein geändertes Bild zu erzeugen, das nur Bildregionen umfasst, die eine Aufeinanderfolge heller Zonen und dunkler Zonen mit einer Frequenz enthält, die höher als eine minimale Frequenz ist, **dadurch gekennzeichnet dass** der Segmentierungsschritt (100) umfasst:

○ das Zuordnen (110), zu jedem Pixel des Bildes, eines Frequenzantwortniveaus, das einer Frequenz aufeinanderfolgender heller Zonen und dunkler Zonen in der Nähe des Pixels entspricht, bei Beurteilung der Variabilitäten der Graustufen der in einem Fenster festgelegter Größe enthaltenen Pixel, das um jedes Pixel positioniert ist, wobei das Zuordnen, zu jedem Pixel, eines Frequenzantwortniveaus bei Beurteilung der Variabilitäten der Graustufen der in einem Fenster festgelegter Größe enthaltenen Pixel, das um jedes Pixel positioniert ist, die Bestimmung eines Graustufengradienten umfasst, der der Differenz zwischen der Graustufe des Pixels und der maximalen Graustufe der minimalen Graustufen der Pixel entspricht, die in einem Fenster enthalten sind, das jedes Pixel des Fensters umgibt, das das Pixel umgibt, wobei das dem Pixel zugeordnete Frequenzantwortniveau der absolute Wert des Graustufengradienten ist,
○ das Festlegen von Bildregionen (150) durch Gruppieren benachbarter Pixel mit demselben Frequenzantwortniveau, das zuvor jedem Pixel zugeordnet wurde,
○ das Bestimmen eines Frequenzantwort-Grenzniveaus (160),
○ Auswählen, aus den durch Gruppieren benachbarter Pixel mit demselben Frequenzantwortniveau zuvor festlegten Bildregionen, der Regionen, deren Pixel ein Frequenzantwortniveau darstellen, das größer oder gleich dem Frequenzantwort-Grenzniveau ist, und
° das Erzeugen eines geänderten Bildes (170), das von den zuvor durch Gruppieren benachbarter Pixel mit demselben Frequenzantwortniveau festgelegten Bildregionen nur Regionen umfasst, deren Pixel ein Frequenzantwortniveau darstellen, das größer oder gleich dem Frequenzantwort-Grenzniveau ist,

wobei das Verfahren danach einen Authentifizierungs- oder Identifizierungsschritt eines Individuums durch Vergleich digitaler Abdrücke auf der Basis des geänderten Bildes umfasst.

2. Verarbeitungsverfahren nach Anspruch 1, wobei die durch Gruppieren benachbarter Pixel mit demselben Frequenzantwortniveau festgelegten Bildregionen strukturiert werden, um das Frequenzantwort-Grenzniveau (160) als topologischen Baum oder zusammenhängenden Komponentenbaum zu bestimmen, wodurch eine Eltern-Töchter-Beziehung zwischen den Bildregionen festgelegt wird, die unter Berücksichtigung sowohl der räumlichen Organisation der durch Gruppieren benachbarter Pixel mit demselben Frequenzantwortniveau festgelegten Regionen als auch der Frequenzantwortniveaus der Pixel, die in den Regionen enthalten sind, bestimmt wird.

3. Verarbeitungsverfahren nach Anspruch 2, wobei die bei der Festlegung von Bildregionen (150) durch Gruppieren benachbarter Pixel mit demselben zuvor jedem Pixel zugeordneten Frequenzantwortniveau festgelegten Bildregionen gemäß einer festgelegten Eltern-Tochter-Beziehung für jede Region i des Bildes wie folgt strukturiert werden:

- zu Anfang werden alle benachbarten Regionen der Region i auf dem Bild als potentielle Eltern betrachtet,
- wenn die Anzahl potentieller Eltern gleich 1 ist, wird der Nachbar j als Eltern der Region i zugeteilt, und die Region i wird von der Liste potentieller Eltern der Region j entfernt,
- anderenfalls wird jede Elternregion der Region i aus der Liste der potentiellen Eltern mit einem niedrigeren Frequenzantwortniveau als das der Region i als die, die das der Region i nächste Niveau hat, ausgewählt, und die Region i wird von der Liste der potentiellen Eltern ihrer Elternregion entfernt, und
- wenn alle potentiellen Eltern der Region i ein höheres Frequenzantwortniveau als das der Region i haben, wird jede Elternregion der Region i als die mit dem nächsten Frequenzantwortniveau der Region i festgelegt, und die Region i wird von der Liste der potentiellen Eltern ihrer Elternregion entfernt.

4. Verarbeitungsverfahren nach einem der Ansprüche 2 oder 3, wobei die Bestimmung des Frequenzantwort-Grenzniveaus (160) auf der Basis der bei der Festlegung von Bildregionen (150) durch Gruppieren benachbarter Pixel mit demselben zuvor jedem Pixel zugeordneten Frequenzantwortniveau festgelegten Bildregionen die Durchführung der folgenden Schritte umfasst:

- für ein festgesetztes Frequenzantwortniveau N, Festlegen (161) einer Gesamtheit von Makro-Regionen, bezeichnet als Niveau N, so dass jede Makro-Region mit dem Niveau N eine Pixel-Elternregion mit einem Frequenzantwortniveau umfasst, das kleiner oder gleich N ist, und die Gesamtheit der Tochterregionen dieser Region,
- für jeden Frequenzantwortniveauwert auf der Basis eines Frequenzantwortniveauausgangswerts im Bild, Berechnen (162) der relativen Oberflächenvariation der Makro-Regionen eines Niveau $N_n$ in Bezug auf Makro-Regionen des vorangehenden Niveaus $N_{n-1}$, und
- Bestimmen des minimalen Frequenzantwortniveaus als das Niveau $N_i$, für das die relative Oberflächenvariation der Makro-Regionen des Niveaus $N_i$ in Bezug auf das vorangehende Niveau $N_{i-1}$ minimal ist.

5. Verarbeitungsverfahren nach einem der vorangehenden Ansprüche, wobei der Segmentierungsschritt (100) vor der Festlegung der Bildregionen (150) durch Gruppieren benachbarter Pixel mit demselben Frequenzantwortniveau die Durchführung der Schritte umfasst:

- morphologische Erosion (121), dann morphologische Dilatation (122) des Bildes in Abhängigkeit von den Graustufenwerten der Pixel, wobei die morphologische Erosion darin besteht, einem Pixel den niedrigsten Wert des Frequenzantwortniveaus eines Pixelfensters zuzuteilen, das es umgibt, wobei die morphologische Dilatation darin besteht, einem Pixel den höchsten Wert des Frequenzantwortniveaus eines Pixelfensters, das es umgibt, zuzuteilen,
- Erzeugen (130) eines Differenzialbildes durch Abziehen des Bildes von dem Ausgangsbild, das der morphologischen Erosion und Dilatation unterzogen wurde,
- Anwenden, auf das Differenzialbild, eines Medianfilters (140) auf den Wert des Frequenzantwortniveaus,

und wobei die Festlegung der Bildregionen (150) durch Gruppieren benachbarter Pixel mit demselben Frequenzantwortniveau auf das Bild angewendet wird, das aus der Anwendung des Medianfilters auf das Differenzialbild resultiert.

6. Verarbeitungsverfahren nach einem der vorangehenden Ansprüche, umfassend ferner, nach dem Segmentierungsschritt (100), einen Verstärkungsschritt (200) der den Pixeln des geänderten Bildes zugeordnetem Graustufen, wobei der Verstärkungsschritt der Pixel in einer Region vom Frequenzantwortniveau der Pixel der Region abhängt.

7. Verarbeitungsverfahren nach Anspruch 6, wobei mit zunehmender Höhe des Frequenzantwortniveaus der Pixel einer Region des geänderten Bildes der Verstärkungsgrad der Graustufen, die den Pixeln der Region zugeordnet sind, zunimmt.

8. Computerprogrammprodukt, umfassend einen rechnerlesbaren Datenträger mit einem Speicher, der Codeinstruktionen für die Durchführung des Verfahrens nach einem der vorangehenden Ansprüche speichert, wenn es von einem Computer (11) ausgeführt wird.

9. Bildverarbeitungssystem (1), umfassend eine Verarbeitungseinheit (10) der Verarbeitungsmittel (11), die für die Durchführung des Verfahrens nach einem der Ansprüche 1 bis 7 ausgelegt sind.

10. Bildverarbeitungssystem (1) nach Anspruch 9, umfassend ferner ein Bilderfassungsmittel (20), wobei das Bilderfassungsmittel (20) ein digitaler Abdrucksensor vom Typ Dünnfilmtransistor ist.

**Claims**

1.  A method for processing a finger image acquired by a fingerprint sensor of direct view type and comprising at least one fingerprint in order to implement an authentication or identification of an individual by comparison of fingerprints, said image comprising a set of pixels, each pixel being associated with a grey level, the method comprising a step (100) of segmentation of the image to generate a modified image only containing regions of the image having an alternation of bright zones and dark zones at a frequency greater than a minimum frequency, **characterized in that** said step of segmentation (100) comprises:

    o the allocation (110), to each pixel of the image, of a frequency response level, corresponding to a frequency of alternations of bright zones and dark zones in the vicinity of the pixel, by evaluating the variabilities of the grey levels of the pixels contained in a window of determined size positioned around each pixel, the allocation, to a pixel, of a frequency response level by evaluating the variabilities of the grey levels of the pixels contained in a window of determined size positioned around each pixel comprising the determination of a gradient of grey levels corresponding to the difference between the gray level of said pixel and the maximum gray level among the minimum gray levels of the pixels contained in a window surrounding each pixel of the window surrounding said pixel, the frequency response level allocated to said pixel being the absolute value of said gradient of grey levels,
    o the definition of regions (150) of the image by grouping together neighbouring pixels of same frequency response level previously allocated to each pixel,
    o the determination of a threshold frequency response level (160),
    o selection, from the regions of the image defined previously by grouping together neighbouring pixels of same frequency response level, of regions of which the pixels have a frequency response level greater than or equal to the threshold frequency response level, and
    o the generation of a modified image (170) only comprising, among the regions of the image defined previously by grouping together neighbouring pixels of same frequency response level, regions of which the pixels have a frequency response level greater than or equal to the threshold frequency response level,

    the method then comprising a step of authentication or identification of an individual by comparison of fingerprints on the basis of the modified image.

2.  The processing method according to claim 1, wherein the regions of the image defined by grouping together neighbouring pixels of same frequency response level are structured, to determine the threshold frequency response level (160), into a topological tree or a connected component tree, defining a parent-daughter relationship between said regions of the image, determined by taking into account both the spatial organization of the regions defined by grouping together neighbouring pixels of same frequency response level and the frequency response levels of pixels contained in said regions.

3.  The processing method according to claim 2, wherein the regions of the image defined during the definition of regions (150) of the image by grouping together neighbouring pixels of same frequency response level previously allocated to each pixel, are structured according to a parent-daughter relationship defined as follows, for each region i of the image:

    - initially all the neighbouring regions of the region i on the image are considered as potential parents,
    - if the number of potential parents is equal to 1, the neighbour j is assigned as parent to the region i, and the region i is removed from the list of potential parents of the region j,
    - if not, each parent region of the region i is selected from the list of potential parents having a frequency response level lower than that of the region i, as that having the level the closest to that of the region i, and the region i is removed from the list of potential parents of its parent region, and
    - if all the potential parents of the region i have a frequency response level greater than that of the region i, each parent region of the region i is determined as that having the frequency response level the closest to that of the region i and the region i is removed from the list of potential parents of its parent region.

4.  The processing method according to any of claims 2 or 3, wherein the determination of the threshold frequency response level (160) comprises the implementation of the following steps, from the regions of the images defined during the definition of regions (150) of the image by grouping together neighbouring pixels of same frequency response level previously allocated to each pixel:

- for a set frequency response level N, definition (161) of a set of macro-regions designated as level N, such that each macro-region of level N comprises a parent region of pixels of frequency response level lower than or equal to N and the set of daughter regions of this region,
- for each value of frequency response level from an initial value of frequency response level in the image, calculation (162) of the relative variation in surface of the macro-regions of a level $N_n$ compared to the macro-regions of the preceding level $N_{n-1}$, and
- the minimum frequency response level is determined as the level $N_i$ for which the relative variation in surface of the macro-regions of level $N_i$ compared to the preceding level $N_{i-1}$ is minimal.

5. The processing method according to any one of the preceding claims, wherein the step of segmentation (100) comprises, before the definition of the regions (150) of the image by grouping together neighbouring pixels of same frequency response level, the implementation of the steps of:

- morphological erosion (121) then dilation (122) of the image as a function of the values of grey level of the pixels, the morphological erosion consisting in assigning to a pixel the value of the lowest threshold frequency response level of a window of pixels encompassing it, the morphological dilatation consisting in assigning to a pixel the value of the highest frequency response level of a window of pixels encompassing it,
- generation (130) of a differential image by subtraction, from the initial image, of the image having undergone morphological erosion and dilation,
- application, to the differential image, of a median filter (140) on the value of the frequency response level,

and wherein the definition of the regions (150) of the image by grouping together neighbouring pixels of same frequency response level is implemented on the image resulting from the application of the median filter on the differential image.

6. The processing method according to any one of the preceding claims, further comprising, after the step of segmentation (100), a step of enhancement (200) of the grey levels associated with the pixels of the modified image, the degree of enhancement of the pixels of a region being a function of the frequency response level of the pixels of the region.

7. The processing method according to claim 6, wherein the higher the frequency response level of the pixels of a region of the modified image, the higher the degree of enhancement of grey levels associated with the pixels of the region.

8. A computer programme product, comprising a computer readable support with a memory storing code instructions for the implementation of the method according to any of the preceding claims, when executed by a computer (11).

9. An image processing system (1), comprising a processing unit (10) of the processing means (11) suited to implementing the method according to any of claims 1 to 7.

10. The image processing system (1) according to claim 9, further comprising an image acquisition means (20), said image acquisition means (20) being a fingerprint sensor of thin film transistor type.

**FIG. 1**

**FIG. 2**

**FIG. 3a**

**FIG. 3b**

**FIG. 3c**

# RÉFÉRENCES CITÉES DANS LA DESCRIPTION

**Documents brevets cités dans la description**

- US 20020054394 A
- US 20020000915 A

**Littérature non-brevet citée dans la description**

- **REVATHY et al.** Automatic Latent Fingerprint Segmentation based on Orientation and Frequency Features. *International Conférence on Communication and Signal Processing,* 03 Avril 2014, 1192-1196
- **SHAHRYAR KARIMI-ASHTIANI ; C.-C. JAY KUO.** A robust technique for latent fingerprint image segmentation and enhancement. *15th IEEE International Conférence on Image Processing, ICIP 2008,* 12 Octobre 2008, ISBN 978-1-4244-1765-0, 1492-1495